(19) Europäisches Patentamt
European Patent Office
Office européen des brevets

(11) **EP 2 180 018 B1**

(12) **EUROPEAN PATENT SPECIFICATION**

(45) Date of publication and mention of the grant of the patent:
**19.06.2013 Bulletin 2013/25**

(21) Application number: **08791617.7**

(22) Date of filing: **25.07.2008**

(51) Int Cl.:
***C08L 77/00*** *(2006.01)* ***C08K 7/14*** *(2006.01)*

(86) International application number:
**PCT/JP2008/063373**

(87) International publication number:
**WO 2009/017043 (05.02.2009 Gazette 2009/06)**

(54) **POLYAMIDE COMPOSITION**

POLYAMIDZUSAMMENSETZUNG

COMPOSITION DE POLYAMIDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **01.08.2007 JP 2007201273**

(43) Date of publication of application:
**28.04.2010 Bulletin 2010/17**

(73) Proprietor: **Kuraray Co., Ltd.**
**Okayama 710-0801 (JP)**

(72) Inventors:
- **MATSUOKA, Hideharu**
  **Tsukuba-shi**
  **Ibaraki 305-0841 (JP)**
- **SHIGEMATSU, Takaharu**
  **Tsukuba-shi**
  **Ibaraki 305-0841 (JP)**
- **TAMURA, Kozo**
  **Tsukuba-shi**
  **Ibaraki 305-0841 (JP)**
- **KAWAHARA, Shigeru**
  **Tokyo 100-8115 (JP)**

(74) Representative: **Müller-Boré & Partner Patentanwälte**
**Grafinger Straße 2**
**81671 München (DE)**

(56) References cited:
**EP-A2- 0 807 665**
**WO-A1-99/40157**
**JP-A- 2000 297 190**
**JP-A- 2004 107 576**
**JP-A- 2004 155 946**
**JP-A- 2005 170 964**
**JP-A- 2007 106 953**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical field

The present invention relates to a polyamide composition. Specifically, the present invention relates to a polyamide composition that is suitable as material to mold electronic parts having thin wall portion acceptable to Surface Mount Technology (SMT) and is excellent in flame retardancy, heat resistance, molding property such as flowability and mechanical characteristic.

Background art

In the surface mount technology, a printed wiring board where paste solder is spread beforehand is prepared, and a surface mount device (SMD) such as chips is mounted on the board with a special device called chip mounter. Next, the solder is melted by heating it to about 250 °C in a high temperature furnace (solder reflow process), and the surface mount device is bonded on the printed wiring board. Conventionally, "Through Hole Mount Technology", that is the method of soldering a lead wire, a foot of chip or the like on the back side of the board after passing it through the board via a throughhole (component hole), has been employed. Employing of the Surface Mount Technology renders the throughhole needed in the Through Hole Mount Technology unnecessary, and may result in miniaturization of parts, increase of the package density, miniaturization of the board, and the like. In addition, employing of the multilayer board has increased freedom of wiring.

A development of small, thin-walled and high performance electronics device has been activated by developing the surface mount technology. In particular, cellular phones and notebook-sized personal computers are typical examples of the product to which thinning is advanced. The thinning of such electronics devices demands lighter and nimbler electronic parts installed in the devices.

Electronic parts are obtained by molding resin materials with the injection molding or the like. When electronic parts become thinner, such problems as the non-filling of the resin materials tend to occur by the poor flowability of the resin material. Therefore, high flowability is required for the resin materials.

Moreover, a flame retardancy as high as V-0 class in the UL-94 standard is usually required for the resin material, in a field of electric or electronic parts. In the vertical burning test of the UL-94 standard, the continuity of burning or the ignition to cotton by dripping burning resin is judged by contacting a thin-walled test specimen vertically fixed with flame. In general, when the flowability of the resin material is raised, the melting tension becomes decrease at the vertical burning, as a result, cotton is ignited by dripping burning resin to the cotton, and the judgment tends to become V-2 class. Thus, the flowability and the flame retardancy are the conflicting characteristics, and it is necessary to strike a good balance between these properties.

Since the polyamide is excellent in mechanical strength, it is a typical example of resin material used by this usage. In the polyamides, Nylon 46 or semiaromatic polyamide has been especially employed, since the resin has good heat resistance acceptable to solder reflow process by SMT (see Patent Document 1 and Patent Document 2). Moreover, reducing molecular weight of a resin or a blended material used, blending of viscosity-reducing agent (see Patent Document 3), and the like are known as a means to improve flowability of polyamide composition comprising such polyamide. However, the polyamide composition with improved flowability tends to have a problem of large deforming of test specimen or a problem of dripping of melt in the examination of flame retardancy based on UL-94 standard. In case of certain size or shape of molded article, the polyamide composition that is large in the deformation of test specimen at flame retardancy examination or the polyamide composition that is easy to fall in drips might not be able to make desired flame retardancy appear.

Compounding of an anti-dripping agent is known as a means to prevent a melt being dripped. For example, a flame-retardant resin composition composed of a thermoplastic resin such as polycarbonates, polyamides and the like, a flame retardant, a scaly inorganic powder, and polytetrafluoro-ethylene (PTFE) that has fibril-forming properties is disclosed in Patent Document 4. Moreover, a flame-retardant polymer composition comprising a thermoplastic polymer such as polyamides, a specific phosphorus compound, and magnesium hydroxide is disclosed in Patent Document 5. It is disclosed that a fluorine resin can be mixed with the flame-retardant polymer composition to obtain a anti-dripping effect at burning. However, only mixing of fluorine resin such as PTFE that have fibril-forming properties with the polyamide composition having improved flowability results in insufficient anti-dripping effect, especially, when a thin-walled test specimen that assumes electronic parts that have thin wall portion of about 0.75 mm in thickness is used as a test specimen of flame retardancy examination based on UL-94 standard. Moreover, when the additive amount of the fluorine resin such as PTFE that has fibril-forming properties is increased for the improvement of the anti-dripping effect in the thin-walled test specimen, fibrous foreign materials derived from the fluorine resin such as PTFE that has fibril-forming properties appear on the surface of the molded article to disfigure the molded article, and mechanical strength such as welding strength is reduced occasionally.

Anti-dripping agents other than the fluorine resin such as PTFE that has fibril-forming properties are known. For example, Patent Document 6 discloses, in order to inhibit drips at burning, adding of modified polyolefins to an aromatic polyamide resin having a melting point of not less than 280 °C and less than 330 °C and concentration of terminal amino groups of 10 to 150 mmol/kg. However, as well as adding of the fluorine resin such as PTFE that has fibril-forming properties, merely adding of the modified polyolefins, when a thin-walled test specimen having thin wall portion of about 0.75 mm in thickness is used as a test specimen of flame retardancy examination based on UL-94 standard, might not result in sufficiently inhibiting drip.

[Patent Document 1] Japanese Published Unexamined Patent Application No. 2003-82228

[Patent Document 2] U.S. Patent Publication No. 2002/0055589
[Patent Document 3] U.S. Patent Publication No. 2003/0229162
[Patent Document 4] Japanese Published Unexamined Patent Application No. H11-172119
[Patent Document 5] Japanese Published Unexamined Patent Application No. 2005-170963
[Patent Document 6] Japanese Published Unexamined Patent Application No. 2002-114906
[Patent Document 7] Specification of US-Patent No. 5773556
[Patent Document 8] Specification of U.S. Patent No. 3370030
[Patent Document 9] Specification of U.S. Patent No. 3032589

Disclosure of invention

Problems to be solved by the invention

It is an object of the present invention to provide a polyamide composition and molded articles made thereof, that is suitable as material to mold electronic parts having thin wall portion acceptable to Surface Mount Technology (SMT) and is excellent in flame retardancy, heat resistance, molding property such as flowability, and mechanical characteristic.

Means for solving the problem

As a result of diligent research to achieve the above purpose, the present inventors found that an excellent polyamide composition in flame retardance, heat resistance, moldability such as flowability, and mechanical characteristic can be obtained by compounding a flame retardant and an anti-dripping agent comprising a fluorine resin (C1) and a polymer (C2) selected from an ionomer or modified aromatic vinyl-based polymer at specific ratio with a polyamide having high melting point. The present invention was completed by study further on the basis of this finding.

That is, the present invention provides: a polyamide composition comprising 100 parts by mass of polyamide (A) with a melting point of 270 °C to 340 °C, from 1 to 100 parts by mass of flame retardant (B), and from 1 to 10 parts by mass of anti-dripping agent (C), wherein the anti-dripping agent (C) comprises a fluorine resin (C1) and at least one polymer (C2) selected from the group consisting of an ionomer and a modified aromatic vinyl-based polymer containing less than 15 mass % of halogen atom, in which a mass ratio of the fluorine resin (C1) / the polymer (C2) is 1/4 to 4/1, and a molded article thereof.

Effect of the Invention

The polyamide composition of the present invention has high flowability and flame retardance as high as V-0 class, and, in addition, is excellent in solder reflow resistance and mechanical characteristic. Especially, even when the polyamide composition of the present invention contains a filler that can raise flowability of the polyamide composition such as a milled fiber, a cut fiber or the like, a trouble of the polyamide composition such as a deterioration of flame retardance by improvement of flowability, and an increase of deformation or occurrence of drip in flame retardance examination can be inhibited.

The polyamide composition of the present invention can be molded into electronic parts having thin wall portions acceptable to SMT such as connector including automotive connector, and socket, capacitor seat, switch, camera module and the like without a lack caused by unfilling or the like. The molded article obtained by using the polyamide composition of the present invention isn't deformed in solder reflow process by SMT, and strength of weld line of the molded article is high, and the molded article has flame retardancy, which can contribute to making the sophisticated electronics device small and thin very much.

The Best Mode for Carrying out the Present Invention

The polyamide composition of the present invention comprises a polyamide (A), a flame retardant (B), and an anti-dripping agent (C).

The polyamide (A) used in the present invention has a melting point of 270 °C to 340 °C. If the melting point of the polyamide is lower than 270 °C, solder reflow resistance is insufficient. On the other hand, if the melting point exceeds 340 °C, a thermal stability of the polyamide and the flame retardant deteriorates, and a moldability deteriorates remarkably since a molding temperature have to be adjusted to 340 °C or more. The melting point of the polyamide (A) is preferably in the range of 285 °C to 330 °C, and is more preferably in the range of 295 °C to 315 °C.

The concrete examples of the polyamide (A) include aliphatic polyamides such as PA46; and semi-aromatic polyamides. Of these, semi-aromatic polyamide is preferred because of its heat resistance and lower water absorption.

A preferred semi-aromatic polyamide is composed of a dicarboxylic acid component units (a1) comprising an aromatic dicarboxylic acid units, and a diamine component units (a2) comprising an aliphatic alkylenediamine units having 6 to 18 carbon atoms. In order to prevent heat resistance of an obtained polyamide composition from decreasing too much, the dicarboxylic acid component units (a1) contain preferably from 40 to 100 mol %, more preferably from 50 to 100 mol %, still more preferably from 60 to 100 mol %, further still more preferably from 75 to 100 mol %, and especially preferably from 90 to 100 mol % of aromatic dicarboxylic acid units.

Examples of the aromatic dicarboxylic acid units include a unit derived from terephthalic acid, isophthalic acid, 2,6-naphthalenedicarboxylic acid, 2,7-naphthalenedicarboxylic acid, 1,4-naphthalenedicarboxylic acid, 1,4-phenylenedioxy-diacetic acid, 1,3-phenylenedioxy-diacetic acid, diphenic acid, 4,4'-oxydibenzoic acid, diphenylmethane-4,4'-dicarboxylic acid, diphenylsulfone-4,4'-dicarboxylic acid or 4,4'-biphenyldicarboxylic acid. These can be used singly or in combination of two or more. Among these aromatic dicarboxylic acid units, in order to prevent heat resistance of the obtained polyamide composition from decreasing too much, unit derived from terephthalic acid, isophthalic acid, 2,6-naphthalenedicarboxylic acid, 2,7-naphthalenedicarboxylic acid, or 1,4-naphthalenedicarboxylic acid is preferable, and unit derived from terephthalic acid is more preferable.

The dicarboxylic acid component units (a1) may contain other dicarboxylic acid units besides the aromatic dicarboxylic acid units. Examples of the other dicarboxylic acid units include unit derived from aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 2,2-diethylsuccinic acid, azelaic acid, sebacic acid, suberic acid or the like; unit derived from alicyclic dicarboxylic acid such as 1,3-cyclopentanedicarboxylic acid, 1,4-cyclohexanedicarboxylic acid or the like. These can be used singly or in combination of two or more. The content of these other dicarboxylic acid units in the dicarboxylic acid cpmponent units (a1) is preferably 60 mol % or less, more preferably 50 mol % or less, still more preferably 40 mol % or less, especially preferably 25 mol % or less, and most preferably 10 mol % or less. The semi-aromatic polyamides may contain unit (a3) derived from trivalent or higher valent polyfunctionalized carboxylic acids such as trimellitic acid, trimesic acid, pyromellitic acid or the like to the extent that melt molding is still possible.

In order to prevent the heat resistance, low water absorption, chemical resistance, and other such properties of the obtained polyamide resin composition from deteriorating too much, the diamine component units (a2) contain preferably 50 to 100 mol %, more preferably from 60 to 100 mol %, still more preferably from 75 to 100 mol %, and especially preferably from 90 to 100 mol % of aliphatic alkylenediamine units having 6 to 18 carbon atoms.

Examples of aliphatic alkylenediamine units having 6 to 18 carbon atoms include unit derived from linear aliphatic alkylenediamine such as 1,6-hexanediamine, 1,7-heptanediamine, 1,8-octanediamine, 1,9-nonanediamine, 1,10-decanediamine, 1,11-undecanediamine, 1,12-dodecanediamine or the like; and unit derived from branched aliphatic alkylenediamine such as 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-diethyl-1,7-heptanediamirie, 2,3-dimethyl-1,7-heptanediamine, 2,4-dimethyl-1,7-heptanediamine, 2,5-dimethyl-1,7-heptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-diniethyl-1,8-octanediamine; 4,4-dimethyl-1,8-octanediamine, 5-methyl-1,9-nonanediamine or the like. These can be used singly or in combination of two or more.

Among the above aliphatic alkylenediamine units having 6 to 18 carbon atoms, unit derived from 1,6-hexanediamine, 1,8-octanediamine, 2-methyl-1,8-octanediamine, 1,9-nonanediamine, 1,10-decanediamine, 1,11-undecanediamine or 1,12-dodecanediamine is preferable, and unit derived from 1,9-nonanediamine and/or unit derived from 2-methyl-1,8-octanediamine are more preferable. When unit derived from 1,9-nonanediamine and unit derived from 2-methyl-1,8-octanediamine are used together, it is preferable for molar ratio of unit derived from 1,9-nonanediamine based on unit derived from 2-methyl-1,8-octanediamine to be preferably from 99/1 to 1/99, more preferably from 95/5

to 60/40, and still more preferably from 90/10 to 80/20. Using of polyamide resin comprising unit derived from 1,9-nonanediamine and unit derived from 2-methyl-1,8-octanediamine in the above proportions can give a polyamide resin composition being better in heat resistance and moldability, having lower water absorption and giving molded articles with more excellent surface appearance.

The diamine component units (a2) may also contain other diamine units besides aliphatic alkylenediamine unit having 6 to 18 carbon atoms. Examples of the other diamine units include unit derived from aliphatic diamine such as ethylenediamine, propanediamine, 1,4-butanediamine or the like; unit derived from alicyclic diamine such as cyclohexanediamine, methylcyclohexanediamine, isophoronediamine, norbornanedimethylamine, tricyclodecanedimethylamine or the like; and unit derived from aromatic diamine such as p-phenylenediamine, m-phenylenediamine, p-xylylenediamine, m-xylylenediamine, 4,4'-diaminodiphenylmethane, 4,4'-diaminodiphenyl sulfone, 4,4'-diaminodiphenyl ether or the like. These can be used singly or in combination of two or more. The content of the other diamine units in the diamine component units (a2) is preferably 50 mol % or less, more preferably 40 mol % or less, still more preferably 25 mol % or less, and especially preferably 10 mol % or less.

The polyamide (A) used in the present invention is preferably 10 % or more, more preferably 40 % or more, still more preferably 70 % or more in a terminal blocking ratio, that is a ratio of terminal group blocked with terminal blocking agent based on the number of terminal group of molecular chain in the polyamide (A). Using of a polyamide with a terminal blocking ratio of 10 % or more gives a polyamide composition having superior melt moldability and giving molded articles with excellent properties such as surface appearance.

The terminal blocking ratio can be determined by measuring the number of terminal carboxyl groups and terminal amino groups in polyamide, measuring the number of terminal groups blocked with terminal blocking agent in the polyamide, and computing with the following calculating formula. Each number of terminal groups can be determined on the basis of the integral value of the characteristic signals corresponding to the various terminal groups measured by $^1$H-NMR.

$$\text{Terminal blocking ratio (\%)} = [\,(X\text{-}Y)\,/\,X\,] \times 100$$

wherein X is the total number of terminal groups in molecular chains (the X is usually equal to two times the number of polyamide molecules), and Y is the total number of the unblocked terminal amino groups and the unblocked terminal carboxyl groups.

A compound having monofunctional group reactive with the terminal amino group or the terminal carboxyl group can be employed as the terminal blocking agent. Specific examples of the terminal blocking agents include acid anhydrides, monoisocyanates, mono-acid halides, monoesters, monoalcohols, monocarboxylic acid, monoamine and the like. In view of reactivity with the terminal group and stability of blocked terminal group, the terminal blocking agents for amino group is preferably monocarboxylic acids, and the terminal blocking agents for carboxyl group is preferably monoamines. More preferred terminal blocking agent is monocarboxylic acids, since they are easy to handle.

There are no particular restrictions on the monocarboxylic acid used as a terminal blocking agent, as long as it is reactive with amino groups. Examples of the monocarboxylic acid include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, isobutyric acid and the like; alicyclic monocarboxylic acids such as cyclohexanecarboxylic acid and the like; aromatic monocarboxylic acids such as benzoic acid, toluic acid, $\alpha$-naphthalenecarboxylic acid, $\beta$-naphthalenecarboxylic acid, methylnaphthalenecarboxylic acid, phenylacetic acid and the like; and mixtures of any of the above. Among these, acetic acid, propionic acid, butyric acid, valeric acid, caproic acid, caprylic acid, lauric acid, tridecanoic acid, myristic acid, palmitic acid, stearic acid, or benzoic acid is preferred because of their reactivity, stability of the blocked terminal, low cost, and the like.

There are no particular restrictions on the monoamine used as the terminal blocking agent, as long as it is reactive with carboxyl groups. Examples of the monoamine include aliphatic monoamines such as methylamine, ethylamine, propylamine, butylamine, hexylamine, octylamine, decylamine, stearylamine, dimethylamine, diethylamine, dipropylamine, dibutylamine or the like; alicyclic monoamines such as cyclohexylamine, dicyclohexylamine or the like; aromatic monoamines such as aniline, toluidine, diphenylamine, naphthylamine or the like; and mixtures of any of the above. Among these, butylamine, hexylamine, octylamine, decylamine, stearylamine, cyclohexylamine or aniline is preferred because of their reactivity, high boiling point, stability of the blocked terminal, low cost, and the like.

As a method of blocking a terminal of a polyamide molecular chain, mentioned is polycondensing of monomers such as dicarboxylic acid and diamine under the presence of the terminal blocking agent. The amount of the terminal-blocking agent used in this method depends on the desired polymerization degree of polyamide, reactivity and boiling point of the terminal-blocking agent, a reaction apparatus, reaction conditions and the like. Usually, the amount of the

terminal-blocking agent falls within the range of preferably from 0.1 to 15 mol %, and more preferably from 0.3 to 15 mol % with respect to the total molar amount of the dicarboxylic acid component and the diamine component which serve as raw materials for the polyamide.

In the polyamide (A) used in the present invention, the terminal amino group content is preferably 40 μeq/g or more and 120 μeq/g or less, more preferably 50 μeq/g or more and 110 μeq/g or less, and especially preferably 60 μeq/g or more and 105 μeq/g or less. When the terminal amino group content is too low, reactive sites with polymer (C2) described later are insufficient, and the anti-dripping effect and the thermal stability tend to be deteriorated. Moreover, when a flame retardant or a filler described later has a polar group that may react with the amino group, reactions of these components and polyamide (A) might be inhibited and the mechanical characteristic tends to be deteriorated. On the other hand, when the terminal amino group content is too high, the polymerization degree of polyamide tends to be deterioratied, and the residence stability tends to be insufficient.

Polyamide (A) used in the present invention can be manufactured by any known method for producing polyamides. For example, it can be manufactured by solution polymerization or interfacial polymerization in which acid chloride and diamine are used as the raw materials, or by melt polymerization, solid-phase polymerization, or melt extrusion polymerization in which dicarboxylic acid and diamine are used as the raw materials.

In a specific example of a method for manufacturing the polyamide (A), a dicarboxylic acid component which constitutes the dicarboxylic acid units, a diamine component which constitutes the diamine units, a catalyst, and, if needed, a terminal blocking agent are added in a reaction vessel all at once to give a nylon salt, which is then heated and polymerized at 200 °C to 250 °C to give a prepolymer having an intrinsic viscosity [η], measured in 30 °C concentrated sulfuric acid, of 0.1 dL/g to 0.6 dL/g, and this prepolymer is then further polymerized in the solid phase or melt polymerized with an extruding machine. If the intrinsic viscosity [η] of the prepolymer is from 0.1 dL/g to 0.6 dL/g, the gap of molar balance between carboxyl groups and amino groups, or reduction of the polymerization velocity is decreased in the subsequent polymerization step, which can obtain a polyamide (A) having a narrower molecular weight distribution, better physical properties, and better moldability.

Moreover, when the nylon salt is prepared, the number of moles of all carboxyl groups (V) and the number of moles of all amino groups (Z), contained in the raw material, are preferably in the relation of $1.0 \leqq ((Z-V)/Z) \times 100 \leqq 6.0$, since a polyamide (A) with terminal amino group content of 40 μeq/g or more and 120 μeq/g or less can be easily manufactured.

If the final step of polymerization is carried out in the solid phase, it is preferred to conduct it under reduced pressure or in an inert gas atmosphere, and if the polymerization temperature is kept from 200 °C to 280 °C, the polymerization velocity is higher, productivity is better, and coloration and gelling can be effectively suppressed. If the final step of the polymerization is carried out with an extruding machine, the polymerization temperature is preferably 370 °C or lower. Polymerizing under the temperature results in substantially no decomposition of the polyamide, and gives a polyamide with no degradation.

Examples of a catalyst used in the manufacture of the polyamide (A) include phosphoric acid, phosphorous acid, hypophosphorous acid, and salts or esters thereof. Examples of the above-mentioned salts and esters include salts of phosphoric acid, phosphorous acid, or hypophosphorous acid with a metal such as potassium, sodium, magnesium, vanadium, calcium, zinc, cobalt, manganese, tin, tungsten, germanium, titanium, antimony or the like; ammonium salts of phosphoric acid, phosphorous acid, or hypophosphorous acid; and ethyl esters, isopropyl esters, butyl esters, hexyl esters, isodecyl esters, octadecyl esters, decyl esters, stearyl esters, or phenyl esters of phosphoric acid, phosphorous acid, or hypophosphorous acid.

An intrinsic viscosity [η] of the polyamide (A) used for the present invention is preferably from 0.6 dL/g to 1.1 dL/g, more preferably from 0.65 dL/g to 1.0 dL/g, and especially preferably from 0.7 dL/g to 0.95 dL/g, as measured in concentrated sulfuric acid at 30 °C. A polyamide with an intrinsic viscosity [η] within the above range gives an excellent polyamide composition in the flowability, and thin, light and small electronic parts can be obtained easily since the filling property to a mold tool having a narrow-slit cavity is improved.

The flame retardant (B) used for the polyamide composition of the present invention is not especially limited. Examples of the flame retardant (B) include halogen-containing flame retardant such as bromine-containing flame retardants or the like; phosphorus flame retardants such as phosphinate, diphosphine oxide, phosphazene compound or the like; silicone flame retardant; alkali metal salt or alkaline earth metal salt of organic carboxylic acid or organic sulfonic acid such as perfluoroalkane sulfonic acid metal salt, tri-harobenzene sulfonic acid metal salt, diphenylsulfone-disulfonic acid metal salt, diphenylsulfone sulfonic acid metal salt or the like. The amount of the flame retardant (B) is 1 to 100 parts by mass, and preferably 10 to 75 parts by mass, per 100 parts by mass of the polyamide (A). If the amount of flame retardant (B) is too low, the resulting polyamide composition may be poor in flowability or flame retardance. On the other hand, if the amount of the flame retardant (B) is too high, the resulting polyamide composition may be poor in mechanical properties.

Examples of the bromine-containing flame retardant include brominated polystyrene, polybromostyrene, brominated polyphenylene ether, brominated bisphenol-type epoxy-based polymers, brominated styrene maleic anhydride

polymers, brominated epoxy resins, brominated phenoxy resins, decabromodiphenyl ether, decabromobiphenyl, tetrabromodiphenyl ether, hexabromododecane, ethylenebistetrabromophthalimide, tris(pentabromobenzyl)isocyanurate, brominated polycarbonate, perbromocyclopentadecane, brominated cross-linked aromatic polymers and the like. These can be used singly or in combination of two or more. A bromine-containing flame retardant having an acid anhydride group and / or epoxy group is preferable in terms of improving compatibility with polyamides. The bromine atom content of the bromine-containing flame retardant is preferably from 15 mass % to 87 mass %. Moreover, flame retardant having low molecular weight and being excellent in thermal stability can be preferably employed.

The phosphorus flame retardant is a flame retardant having phosphorus atom. Examples of the phosphinates used as a phosphorus flame retardant include a calcium salt or an aluminum salt of a phosphinic acid or a diphosphinic acid disclosed in Patent Document 7. Moreover, examples of the diphosphine oxides used as a phosphorus flame retardant include a diphosphine oxide disclosed in Patent Document 5, Patent Document 8 or Patent Document 9. These phosphinates or diphosphine oxides can be suitably used for a polyamide with a high melting point, since these are excellent in heat resistance.

When the phosphinates or the diphosphine oxides are used as the flame retardant (B), melamine polyphosphates are preferably used together as a phosphorus flame retardant. The combination use with melamine polyphosphates causes carbonization of the polyamide to shorten a burning time at a flame retardance examination. If melamine polyphosphates are excessively used, trouble such as a pollution of mold at injection molding of polyamide composition tends to occur. Therefore, the amount of the melamine polyphosphates is preferably less than 1 parts by mass per 100 parts by mass of the polyamide (A).

The flame retardant (B) is preferably at least one flame retardant selected from the group consisting of the halogen-containing flame retardant and the phosphorus flame retardant, more preferably at least one flame retardant selected from the group consisting of the bromine-containing flame retardant and the phosphorus flame retardant, especially preferably at least one flame retardant selected from the group consisting of brominated polystyrene, polybromostyrene, brominated polyphenylene ether, and phosphinate, because of their excellent heat resistance and availability against the polyamide with a high melting point effectively.

The polyamide composition of the present invention may comprise a flame retardant aid (D). Examples of the flame retardant aid include antimony trioxide, antimony pentoxide, sodium antimonate, sodium oxide, tin oxide, zinc stannate, zinc oxide, iron oxide, magnesium hydroxide, calcium hydroxide, zinc borate, kaolin, clay, calcium carbonate and the like. These can be used singly or in combination of two or more. These flame retardant aids may be treated with a silane coupling agent, titanium coupling agent, or the like. Zinc stannate, sodium antimonate and / or zinc borate are preferable in these. The amount of the flame retardant aid (D) is preferably from 1 to 50 parts by mass, and more preferably from 1 to 20 parts by mass, per 100 parts by mass of the polyamide (A). The polyamide composition with more excellent flame retardancy can be obtained by compounding the flame retardant aid.

A fluorine resin (C1) and at least one polymer (C2) selected from the group consisting of an ionomer and a modified aromatic vinyl-based polymer containing less than 15 mass % of halogen atom is used as anti-dripping agent (C) for the present invention.

The fluorine resin (C1) is not especially limited as long as it shows a anti-dripping effect at burning. As for fluorine resin (C1), fluorine resin having fibril-forming properties is preferable. Examples of the fluorine resin include polytetrafluoroethylene, polyhexafluoropropylene, tetrafluoroethylene-hexafluoropropylene copolymer, tetrafluoroethylene-perfluoroalkylvinylether copolymer, tetrafluoroethylene-ethylene copolymer, hexafluoropropylene-propylene copolymer, polyvinylidenefluoride, vinylidenefluoride-ethylene copolymer, polychlorotrifluoroethylene, modified polytetrafluoroethylene obtained by substituting a part of fluorine atom of polytetrafluoroethylene. Among these, polytetrafluoroethylene, tetrafluoroethylene-perfluoroalkylvinylether copolymer, tetrafluoroethylene-hexafluoropropylene copolymer, tetrafluoroethylene-ethylene copolymer, and polyvinylidenefluoride are preferable, and polytetrafluoroethylene and tetrafluoroethylene-ethylene copolymer are especially preferable, from the viewpoint of anti-dripping effect at burning. A suspension polymerization or an emulsion polymerization may be employed as a method for producing of fluorine resin. Among them, the emulsion polymerization is preferable from the viewpoint of fibril-forming properties and an easiness of a control of an primary particle diameter. An average particle diameter of the fluorine resin is preferably from 100 to 800 μm. A commercialized product can be used as the fluorine resin (C1), and a commercialized product called "Fibrous PTFE" can be used preferably, for example.

A modified aromatic vinyl-based polymer used as polymer (C2) is a functionalized aromatic vinyl-based polymer containing less than 15 mass % of halogen atom. Examples of the functional group include epoxy group, hydroxyl group, carboxyl group, acid anhydride group, amino group and the like. Among these, at least one selected from the group consisting of epoxy group, carboxyl group, and acid anhydride group is preferable. Epoxy group and / or acid anhydride group is more preferable since they are easy to react with a terminal amino group and a terminal carboxyl group in polyamide (A), and give a polyamide composition being more excellent in flame retardance.

The modified aromatic vinyl-based polymer includes a polymer manufactured by copolymerization of a denaturant and a monomer comprising an aromatic vinyl compound, and a polymer manufactured by graft reaction of an

aromatic vinyl-based polymer with an denaturant. Among these, the polymer manufactured by copolymerization of a denaturant and a monomer comprising an aromatic vinyl compound is preferable. An aromatic vinyl-based polymer before modification for the graft reaction is obtained by polymerizing a monomer comprising an aromatic vinyl compound.

The monomer comprising an aromatic vinyl compound may be a monomer comprising only aromatic vinyl compound, or may be a monomer comprising not only aromatic vinyl compound but also other monomer. Examples of the aromatic vinyl compound include, styrene, α-methylstyrene, ß-methylstyrene, o-methylstyrene, m-methylstyrene, p-methylstyrene, 2,4-dimethylstyrene, 2,4,6-trimethylstyrene, 4-propylstyrene, t-butylstyrene, 4-cyclohexylstyrene, 4-dodecylstyrene, 2-ethyl-4-benzilstyrene, 4-(phenylbutyl)styrene, 1-vinylnaphthalene, vinylanthracene, indene, acetonaphthylene, monofluorostyrene, difluorostyrene, monochlorostyrene, methoxy styrene and the like. These aromatic vinyl compounds can be used singly or in combination of two or more. Styrene is preferable in these aromatic vinyl compounds because of its low cost, easiness of manufacturing, and excellent availability.

Examples of the other monomers except the aromatic vinyl compound include α-olefine such as 1-butene, 1-pentene, 1-hexene and the like; conjugated diene such as 1,3-butadiene, 2-methyl-1,3-butadiene (alias name: isoprene), 2,3-dimethyl-1,3-butadiene, 1,3-pentadiene, 1,3-hexadiene and the like; and methyl vinyl ether. These other monomers can be used singly or in combination of two or more.

Examples of a denaturant used for introduction of an epoxy group include glycidyl acrylate, glycidyl methacrylate, itaconic acid glycidyl ester, allyl glycidyl ether, 2-methylallyl glycidyl ether, styrene p-glycidyl ether, 3,4-epoxy-1-butene, 3,4-epoxy-3-methyl-1-butene, 3,4-epoxy-3-methyl-1-pentene, 5,6-epoxy-1-hexene, vinyl cyclohexene monooxide, p-glycidyl styrene and the like. Among them, glycidyl acrylate or glycidyl methacrylate is preferable.

Examples of a denaturant used for introduction of a carboxyl group include acrylic acid, methacrylic acid, crotonic acid, maleic acid, fumaric acid, itaconic acid, succinic acid, phthalic acid and the like.

Examples of a denaturant used for introduction of an acid anhydride group include α,ß-unsaturated dicarboxylic anhydride such as maleic anhydride, itaconic anhydride, phthalic anhydride, citraconic anhydride and the like. The maleic anhydride is preferable in these.

When the aromatic vinyl-based polymer before modification is a homopolymer composed of a single aromatic vinyl compound or a random copolymer composed of two or more of monomers, a content of unit derived from aromatic vinyl compound in the aromatic vinyl-based polymer is preferably from 50 to 100 mass %, more preferably from 80 to 100 mass %, especially preferably from 90 to 100 mass % based on mass of the aromatic vinyl-based polymer before modification. When the denaturant has been introduced by the copolymerization, that is when the modified aromatic vinyl-based polymer is manufactured by copolymerization of the denaturant and the monomer comprising aromatic vinyl compound, the above-mentioned "mass of the aromatic vinyl-based polymer before modification" means a value that mass of the denaturant introduced is subtracted from mass of the modified aromatic vinyl-based polymer, that is a value that mass of the copolymerized denaturant is subtracted from mass of the modified aromatic vinyl-based polymer manufactured by copolymerizing the denaturant and the monomer comprising aromatic vinyl compound.

In other words, when the aromatic vinyl-based polymer before modification supplied to graft reaction is a homopolymer composed of a single aromatic vinyl compound or a random copolymer composed of two or more of monomers, in the modified aromatic vinyl-based polymer manufactured by the graft reaction of an aromatic vinyl-based polymer with an denaturant, a content of the unit derived from the aromatic vinyl compound in the aromatic vinyl-based polymer before modification supplied to the graft reaction is preferably from 50 to 100 mass %, more preferably from 80 to 100 mass %, especially preferably from 90 to 100 mass %. Moreover, in the modified aromatic vinyl-based polymer manufactured by copolymerizing the denaturant and the monomer comprising aromatic vinyl compound, with assuming a polymer (in a word aromatic vinyl-based polymer before modification) which has structure to exclude unit derived from the denaturant, when the polymer is a homopolymer composed of a single aromatic vinyl compound or a random copolymer composed of two or more monomers, a content of unit derived from aromatic vinyl is preferably from 50 to 100 mass %, more preferably from 80 to 100 mass %, especially preferably from 90 to 100 mass % based on a value that mass of the denaturant introduced is subtracted from mass of the modified aromatic vinyl-based polymer.

Moreover, the aromatic vinyl-based polymer before modification may be an aromatic vinyl-based elastomer. A block copolymer composed of an aromatic vinyl-based polymer block and a conjugated diene-based polymer block can be preferably used as the aromatic vinyl-based elastomer. Example of such a block copolymer includes a block copolymer represented with (M-N)p-M, (M-N)q, and $N-(M-N)_r$, wherein the aromatic vinyl-based polymers block is represented as M, the conjugated diene-based polymer block is represented as N, and each of p, q, and r represents an integer of one or more. The block copolymer is preferably a triblock copolymer represented as M-N-M or the diblock copolymer represented as M-N, more preferably the triblock copolymer represented as M-N-M.

The aromatic vinyl compound mentioned above can be used as an aromatic vinyl compound composing the aromatic vinyl-based polymer block. As conjugated diene compound composing the conjugated diene-based polymer block, 1,3-butadiene, 2-methyl-1,3-butadiene (another name: isoprene), 2,3-dimethyl-1,3-butadiene, 1,3-pentadiene, 1,3-hexadiene and the like are mentioned. These conjugated diene compound can be used singly or in combination of two or more.

Moreover, the conjugated diene-based polymer block may be not hydrogenated, may be partially hydrogenated, or may be entirely hydrogenated. The conjugated diene-based polymer block is hydrogenated preferably 50 mol % or more, more preferably 60 mol % or more, most preferably 80 mol % or more, based on total number of moles of double bond in the conjugated diene-based polymer block before hydrogenation.

When the aromatic vinyl-based polymer before modification is a block copolymer composed of the aromatic vinyl-based polymer block and the conjugated diene-based polymer block, a content of the unit derived from the aromatic vinyl compound in the aromatic vinyl-based polymer is preferably from 1 to 99 mass %, more preferably from 10 to 90 mass %, most preferably from 20 to 80 mass % based on mass of the aromatic vinyl-based polymer before modification. When the denaturant has been introduced by the copolymerization, that is when the modified aromatic vinyl-based polymer is manufactured by copolymerization of the denaturant nad the monomer comprising aromatic vinyl compound, the above-mentioned "mass of the aromatic vinyl-based polymer before modification" means a value that mass of the denaturant introduced is subtracted from mass of the modified aromatic vinyl-based polymer, that is a value that mass of the copolymerized denaturant is subtracted from mass of the modified aromatic vinyl-based polymer manufactured by copolymerization of the denaturant and the monomer comprising aromatic vinyl compound.
In other words, when the aromatic vinyl-based polymer before modification supplied to the graft reaction is a block copolymer composed of aromatic vinyl-based polymer block and conjugated diene-based polymer block in the modified aromatic vinyl-based polymer manufactured by graft reaction of an aromatic vinyl-based polymer with an denaturant, a content of the unit derived from the aromatic vinyl compound in the aromatic vinyl-based polymer before modification supplied to the graft reaction is preferably from 1 to 99 mass %, more preferably from 10 to 90 mass %, especially preferably from 20 to 80 mass %. Moreover, in the modified aromatic vinyl-based polymer manufactured by copolymerization of the denaturant and the monomer comprising aromatic vinyl compound, with assuming a polymer (in a word aromatic vinyl-based polymer before modification) which has structure to exclude unit derived from the denaturant, when the polymer is a block copolymer composed of aromatic vinyl-based polymer block and conjugated diene-based polymer block, a content of unit derived from the aromatic vinyl compound is preferably from 1 to 99 mass %, more preferably from 10 to 90 mass %, especially preferably from 20 to 80 mass % based on a value that mass of the denaturant introduced is subtracted from mass of the modified aromatic vinyl-based polymer.

The concrete examples of the aromatic vinyl-based polymer before modification include polystyrene (PS), styrene-isoprene-styrene block copolymer (SIS), styrene-butadiene-styrene block copolymer (SBS), styrene-ethylene/butylene-styrene block copolymer (SEBS), and styrene-ethylene/propylene-styrene block copolymer (SEPS).

Though the amount of functional group contained in the modified aromatic vinyl-based polymer is not especially limited, as the used amount of the denaturant is preferably the range of 0.1 to 30 mass %, more preferably the range of 1 to 25 mass %, particularly preferably the range of 5 to 20 mass % based on mass of the modified aromatic vinyl-based polymer.

When the weight-average molecular weight of the modified aromatic vinyl-based polymer is too small, a reactivity of polyamide (A) with the terminal amino group rises too much, which might cause some trouble. Therefore, the weight-average molecular weight of the modified aromatic vinyl-based polymer is preferably 1,000 or more, more preferably 10,000 or more, furthermore preferably 50,000 or more, and particularly preferably 100,000 or more. Though the upper limit of the weight-average molecular weight is not especially limited, modified aromatic vinyl-based polymer having the weight-average molecular weight of 1,000,000 or less may be used.

The ionomer used as polymer (C2) is obtained by introducing an ionic bond (cross-linkage) between the long-chains composed mostly of olefine. Ionomer such as polyethylene, polypropylenes, ethylene-propylene copolymers or those polyolefin copolymers is used as a suitable ionomer. The carboxyl group is usually used for the anion part of the ionically cross-linkage. A metal ion such as Na, K, Mg, Zn or the like is used for the cation part of the ionically cross-linkage. The carboxyl group can be introduced by copolymerizing acrylic acid or methacrylic acid. As the ionomer, exemplified is one obtained by cross-linking a polyolefin having carboxyl group as the functional group with the Na ion. Moreover, the marketed one can be used as the ionomer.

The amount of the anti-dripping agent (C), that is the total amount of the fluorine resin (C1) and the polymer (C2), is from 1 to 10 parts by mass, preferably from 1 to 4 parts by mass, more preferably from 1 to 3 parts by mass, and furthermore preferably from 1 to 2 parts by mass, per 100 parts by mass of the polyamide (A). Moreover, the fluorine resin (C1) and the polymer (C2) are mixed in mass ratio of the fluorine resin (C1) / the polymer (C2) within the range of 1/4 to 4/1, preferably 1/3 to 3/1, and more preferably 1/1 to 3/1.

The amount of the fluorine resin (C1) is preferably not more than 2 parts by mass, particularly preferably not more than 1.5 parts by mass, per 100 parts by mass of the polyamide (A), considering the handling and fibril-forming properties. If the fluorine resin is mixed exceeding 2 parts by mass, a fibriform defective appearance of the molded article easily occurs, and contact faults of electronic parts tends to be caused by the fibriform foreign material. The amount of the polymer (C2) is preferably not more than 2 parts by mass, more preferably not more than 1.5 parts by mass, per 100 parts by mass of the polyamide (A), from the viewpoint of the deterioration of the thermal stability, the burr at molding process, the flowability, or the like.

A preferable combination of the fluorine resin (C1) and the polymer (C2) as the anti-dripping agents (C) is a combination of polytetrafluoroethylene having fibril-forming properties and the polystyrene into which epoxy group and / or acid anhydride group is introduced. Using of the anti-dripping agent (C) by this combination gives a polyamide composition having high flowability and depression effect of drooling at injection molding operation.

The polyamide composition of the present invention may comprise a filler (E). The filler in the form of fiber, powder, cloth, or any other form can be used as filler (E). Specific examples of the filler include: fibrous fillers such as glass fibers, carbon fibers, aramid fibers, liquid crystalline polymer (LCP) fibers, metallic fibers or the like; tabular fillers such as mica, talc or the like; needle-like fillers such as potassium titanate whiskers, aluminum borate whiskers, calcium carbonate whiskers, magnesium sulfate whiskers, wollastonite, sepiolite, xonotlite, zinc oxide whiskers or the like; and powdery fillers such as silica, silica-alumina, alumina, titanium dioxide, zinc oxide, boron nitride, potassium titanate, calcium carbonate, calcium silicate, magnesium sulfate, aluminum borate, asbestos, glass beads, carbon black, graphite, molybdenum disulfide, phenolic resin particle, cross-linked styrene-based resin particle, cross-linked acrylic-based resin particle or the like. These fillers can be used singly or in combination of two or more. The surface of the fillers is preferably surface-treated by a silane coupling agent, a titanium coupling agent, the other high-molecular weight substance or the other low-molecular weight substance to improve a dispersibility to the polyamide (A).

In this present invention, fibrous or needle-like filler is preferably used from the viewpoint of obtaining the molded article with a high mechanical strength. To be adjust to the molded article having a thin wall portion of 0.2 mm or less in thickness, the average length of the fibrous or needle-like filler used is preferably from 10 $\mu$m to 500 $\mu$m, and more preferably from 10 $\mu$m to 400 $\mu$m. When the average length is less than 10 $\mu$m, mechanical strength of the obtained molded article tends to be deteriorated. When the average length is more than 500 $\mu$m, the fibrous or needle-like filler floccs, the mixing technique is limited, and productivity tends to be deteriorated. The shape of cross section of the fibrous or needle-like filler may be round shape, cocoon shape or flat shape. The glass fiber is especially preferable among the fibrous or needle-like filler. Mixing of the glass fiber improves not only mechanical strength of the molded article made of the polyamide composition, but also the dimensional stability, the lower water absorption, and the like thereof.

The glass fiber used as filler (E) includes chopped strand, milled fiber, cut fiber, and the like. The chopped strand is obtained by cutting a strand obtained by bundling a glass mono-filament in specific length, for example about from 3 mm to 6 mm. The chopped strand having fiber diameter in the range of 3 $\mu$m to 30 $\mu$m can be used in the present invention. The fiber is cut in length that adapts to the thickness of the molded article at the molded article is molded even if a chopped strand having longer fiber length is used. The shape of cross section of the fiber may be round shape, cocoon shape or flat shape. The milled fiber, that is powder, is obtained by pulverizing glass fibers with a stone mill, a ball mill, or the like. The cut fiber is obtained by uniforming glass fiber in the aspect ratio from about 10 to about 50 that is in the middle of the aspect ratios of the chopped strand and the powder. In the present invention, using of the milled fiber and the cut fiber gives a polyamide composition having good balance between elevated flowability and highly maintained flame retardance.

A powdery filler can be mixed to improve dimension stability, mechanical properties, heat resistance, chemical properties, physical properties, sliding properties, heat radiation performance and the like of the molded articles. The powdery filler used is preferably from 0.1 $\mu$m to 200 $\mu$m, more preferably from 1 $\mu$m to 100 $\mu$m in a mean particle size. When plate-like fillers such as talc, mica or the like are added, mechanical properties such as welding strength and the like tends to reduce slightly.

The amount of the filler (E) is preferably from 0.1 to 300 parts by mass, more preferably from 0.1 to 150 parts by mass, especially preferably from 0.5 to 100 parts by mass, relative to 100 parts by mass of the polyamide (A). An excellent polyamide composition in either moldability or the mechanical property is obtained when the amount of the filler (E) is in the above-mentioned range.

The polyamide of the present invention may comprise an amide compound (F). The amide compound (F) includes amide oligomers, fatty acid amides, bisamides of aliphatic dicarboxylic acid, aromatic carboxylic acid amides, bisamides of aromatic dicarboxylic acid, bisamides of aliphatic diamine or the like. Among them, preferred are amide compounds obtained by a reaction between a diamine and a mixture of a monocarboxylic acid and a dicarboxylic acid. The amide compound (F) is preferably from 80 °C to 260 °C in a melting point, in the viewpoint of flowability, moldability and the like of the polyamide composition. The molecular weight of the amide compound (F) is preferably from 300 to 3000. The content of the amide compound (F) is preferably 0.2 to 10 parts by mass per 100 parts by mass of the polyamide (A).

An ester compound (G) represented by Chemical Formula (I) disclosed in Patent Document 3 may be comprised in the polyamide composition of the present invention to improve the flowability if necessary.

[Chemical Formula 1]

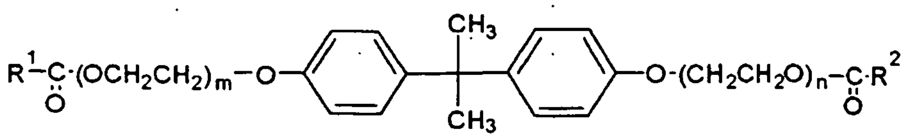

(1)

wherein $R^1$ and $R^2$ are respectively alkyl groups having at least 9 carbon atoms, and m and n are respectively integer from 1 to 3. The amount of the ester compound (G) is preferably from 0.2 to 20 parts by mass, more preferably from 0.5 to 10 parts by mass, relative to 100 parts by mass of the polyamide (A).

The polyamide composition of the present invention may further comprise an acid catcher such as hydrotalcite, alkaline-earth metals or the like; other polymer such as polyphenylene sulfides, polyolefins, polyesters, aliphatic polyamides, polyphenylene oxides, liquid crystal polymers or the like; colorants; ultraviolet absorbers such as benzophenone ultraviolet absorbers, benzotriazol ultraviolet absorbers, triazine ultraviolet absorbers or the like; light stabilizers such as hindered amine light stabilizers; thermal stabilizers such as phosphorous acid, phosphoric acid, phosphonous acids, and these esters; antioxidants such as hindered phenol antioxidants, thio antioxidants, phosphorus antioxidants, hindered amine antioxidants or the like; antistatic agents; crystal nucleating agent; plasticizers; mold lubricants such as wax like polyolefin wax and higher fatty acid ester, silicone oil or the like; lubricants; and the like.

In the polyamide composition improved in the flowability, the effect of the present invention is more important. The flowability of the polyamide composition of the present invention as "bar-flow length" is preferably 65 mm or more, and more preferably 68 mm or more, wherein the "bar-flow length" is a flow length when a melted resin is injected into a sheet shape mold of 0.5 mm in thickness and 40 mm in width at a cylinder temperature of 320 °C, an injection pressure of 74 MPa, and a mold temperature of 140 °C.

The polyamide composition of the present invention can be manufactured by kneading the above-mentioned constituents according to a well-known method. The present invention includes a method for manufacturing a polyamide composition comprising a step of melt-kneading 100 parts by mass of the above-mentioned polyamide (A), from 1 to 100 parts by mass of the above-mentioned flame retardant (B), and from 1 to 10 parts by mass of the above-mentioned anti-dripping agent (C). As the method for manufacturing the polyamide composition of the present invention, a method comprising the steps of preliminary mixing the constituents with a blending machine such as tumbler, V type blender, Henschel mixer, Nauta mixer, ribbon mixer, mechanochemical device, extrusion blender, or the like, melt-kneading the mixture with a melt-kneading machine such as single screw extruder, vent-type double screw extruder, or the like, and then pelletizing it by a pelletizing means such as pelletizer, or the like; a method comprising the steps of preparing a master batch of desired constituents, mixing with other components if necessary, melt-kneading the mixture with a melt-kneading machine, and then pelletizing it; a method comprising the steps of supplying the constituents to a melt-kneading machine, melt-kneading and pelletizing them; a method comprising the steps of sequentially adding specific constituents in the middle of a melt-kneading machine, and kneading them; and the like. From the viewpoint of productivity, a method of using each constituent of at least polyamide (A), flame retardant (B), fluorine resin (C1), and polymer (C2) as it is, with not forming master batch nor polymer composition (inclusion body, or the like) beforehand by mixing them with other constituent, is preferable, a method comprising the steps of separately preparing at least polyamide (A), flame retardant (B), fluorine resin (C1), and polymer (C2); dry-blending them collectively, and then melt-kneading the mixture; or a method comprising the steps of separately preparing at least polyamide (A), flame retardant (B), fluorine resin (C1), and polymer (C2); and then melt-kneading collectively them is more preferable. The preferred extruder as the melt-kneading machine is a extruder equipped with a twin-screw. The melt-kneading temperature is preferably from 280 °C to 340 °C. The polyamide composition of the present invention in the form of pellet can be used to manufacture various molded articles. Since the case of applying to a small injection molding machine with screw diameter 18mmΦ or less is assumed, pellet diameter of the polyamide composition of the present invention is preferably from 1 mm to 3mm, and pellet length is preferably from 1 mm to 3.5 mm.

When the fluorine resin having fibril-forming properties is used as fluorine resin (C1), it is preferable to cool the fluorine resin at the temperature of 20 °C or less, and use the one in the cooled state for manufacturing the polyamide composition. The self-cohesion and the fibrilization are suppressed by cooling the fluorine resin, and the defective appearance and the fibriform foreign body occurrence of the molded article caused by defective dispersion are suppressed. Moreover, polyamide (A) can be obtained or prepared in form such as powders, granulationes, pellets or the like. Even if polyamide (A) of which shape is used, the polyamide composition of the present invention can be manufactured. From the viewpoint that prevents the cohesion and the fibrilization, when the fluorine resin having fibril-forming properties is used as fluorine resin (C1), the polyamide (A) is preferable in powdered form.

Various molded articles can be manufactured from the polyamide composition of the present invention by the usual forming method for thermoplastics such as injection molding, extrusion molding, press molding, blow molding,

calender molding, casting molding, insert molding, two-color molding or the like which can be selected corresponding to the kind, the usage, the shape, and the like of an aimed molded article. Moreover, combination of the above-mentioned molding methods can be employed as the forming method. The injection molding is particularly preferable in viewpoints of easiness of molding, mass production, the cost and the like. Moreover, a composite article of the polyamide composition of the present invention and other polymer can be produced. In addition, the polyamide composition of the present invention can be combined with a molded article composed of metal, a fabric, or the like.

Since the polyamide composition of the present invention has excellent flowability, and flame retardancy of V-0 class, it can be used for various things which need flame retardancy in a variety of fields, such as electronic devices, automobiles parts, household electrical products, construction materials, sanitary goods, sports goods, sundries or the like. The concrete examples include connectors, switches, sensors, sockets, capacitors, jacks, fuse holders, relays, coil bobbins, resistors, IC housings, LED housings, gears, bearing retainers, spring holders, chain tensioners, washers, various other housings, weight rollers, breaker parts, clutch parts and the like. Of these, the polyamide composition of the present invention is particularly useful for the object acceptable to the SMT method such as connectors, sockets, card connectors, jacks, power supply parts, switches, sensors, capacitor seats, relays, resistors, fuse holders, coil bobbins, IC housings, LED housings or the like.

Examples

Hereinafter, Examples are shown to describe the present invention concretely. The present invention, however, is not limited in any way by these Examples.

Melting point of polyamide :

In the furnace of differential scanning calorimetry analysis device (DSC), 10 mg of polyamide was completely melted by heating at 350 °C for 2 minutes under the nitrogen atmosphere. The temperature of the polyamide was reduced down to 50 °C in a speed of 100 °C/min, and then the temperature was elevated again in a speed of 10 °C/min. The position of an appearing endothermic peak was determined during the temperature elevation. The temperature at the position was assumed to be melting point (°C).

Content of terminal amino group :

In 35 ml of phenol, 1 g of polyamide was dissolved and 2 ml of methanol was added to obtain a solution. Titration using 0.01N aqueous hydrochloric acid with thymol blue as an indicator was performed to determine the content of the terminal amino group (μeq/g) in the polyamide.

Intrinsic viscosity [η] :

Inherent viscosity ($\eta_{inh}$) of each of polyamide solutions having concentrations of 0.05 g/dl, 0.1 g/dl, 0.2 g/dl and 0.4 g/dl in concentrated sulfuric acid was determined at 30 °C using the following calculating formula. The value obtained by extrapolating the inherent viscosities to zero concentration was defined as intrinsic viscosity [η]. In the following calculating formula, to represents the flow-down time (sec) of the solvent, $t_1$ represents the flow-down time (sec) of the polyamide solution and C represents the concentration (g/dl) of the polyamide in the solution. When the polyamide solution contained solid material, the solid material was removed by filtration using a filter having a pore size of 0.5 μm, and the obtained filtrate was used for the measurement.

$$\eta_{inh} = [\ln(t_1 / t_0)] / C$$

Mechanical properties :

Specimen for tensile strength at break evaluation was prepared according to JIS No. 1 dumbbell by injection molding of polyamide composition at the cylinder temperature that is about 20 °C higher than the melting point of the polyamide contained in the polyamide composition and at the mold temperature was 140 °C. Moreover, specimen for weld strength evaluation was prepared by filling from both ends of the mold for the JIS No. 1 dumbbell. The tensile strength at break and the weld strength at break were measured at 23 °C using autographs produced by Shimadzu Corporation based on JIS K 7113.

Flame Retardance :

A platy molded article of 0.75 mm in thickness was obtained by injection molding of the polyamide composition. The flame retardance of the molded article was evaluated based on the following regulations of the UL-94 standards. The molded article having a thickness of 0.75 mm was vertically clamped at its top end, a predetermined flame was applied to the bottom edge of the molded article for 10 seconds and then removed. The time for which the molded article had been still burning after the flame removal was measured, that is first burning time. The flame was again applied to the bottom edge of the molded article for 10 seconds right after fire extinguishment, and then removed. The time for which the molded article had been still burning after the flame removal was measured, that is second burning time. The same measurement was made for five test pieces to obtain a total of ten data, of which five data were first burning time and five data were second burning time. The sum of these ten data was termed as T, and the maximum value thereof was termed as M.

A rating of "V-0" was given if T was 50 seconds or less, M was 10 seconds or less, the molded article did not burn all the way up to the clamp, and no flaming molten drips ignited a dried cotton cloth which was placed 12 inches below the molded article.

A rating of "V-1" was given if T was 250 seconds or less, M was 30 seconds or less, and the other condition was satisfied the same as for the "V-0" rating.

A rating of "V-2" was given if T was 250 seconds or less, M was 30 seconds or less, the molded article did not burn all the way up to the clamp, and flaming molten drips ignited a dried cotton cloth which was placed 12 inches below the molded article.

Degree of deformation :

The degree of deformation was evaluated in the evaluation test of the flame retardance that described above to make the prevention of dripping clearer in this examples. That is, the bottom edge of the molded article before the first flame contact was assumed to be zero position, and the shape after the fire extinguishment in the second flame contact was evaluated by the following indices.

A rating of "A" was given if the bottom edge of the molded article moved to the upper side or moved to the lower side, deformation volume to the lower side was less than 5 mm in which the deformation volume was distance between the bottom edge of the molded article after the second flame extinguishment and the bottom edge of the molded article before first flame contact, and there was no molten drips.

A rating of "B" was given if the bottom edge of the molded article moved to the lower side and the deformation volume to the lower side was 5 mm or more, and there was no molten drips.

A rating of "C" was given if there was molten drips but the cotton cloth didn't ignite.

A rating of "D" was given if there was molten drips but the cotton cloth did ignite.

Solder reflow resistance :

A plate of 0.5 mm in thickness, 10 mm in width, and 30 mm in length was prepared by injection molding the polyamide composition at a temperature that is about 20 °C higher than the melting point of the polyamide contained in the polyamide composition. This plate had been left for 100 hours in atmosphere of 40 °C and 95 % RH. Thereafter, this plate was heated in an infrared oven for 1 minute at 150 °C, then temperature was elevated at the speed of 100 °C/min. The temperature that deformation or swollenness of the plate occurred was assumed to be an index of the solder reflow resistance.

Bar-flow length :

A flow length was measured when a melted resin was injected into a sheet shape mold of 0.5 mm in thickness and 40 mm in width at a cylinder temperature of 320 °C, an injection pressure of 74 MPa, and a mold temperature of 140 °C. And, the measured flow length was assumed to be a bar-flow length. When the flow length doesn't reach a constant value at an each position based on the width or thickness of the injection molded plate, a value that the sum of the maximum flow length and a minimum flow length was divided by two was assumed to be "Bar-flow length". Higher value of the flow length means higher flowability of the material.

Surface appearance :

A plate of 0.5 mm in thickness, 10 mm in width, and 30 mm in length was prepared by injection molding the polyamide composition at a temperature that was about 20 °C higher than the melting point of the polyamide contained

in the polyamide composition. The surface of the plate was observed.

A rating of "A" was given if the aggregate of the fibrous PTFE was not visually detected.

A rating of "B" was given if the aggregate was visually detected.

The aggregate includes a filiform foreign material generated around a gate of the plate.

In the Examples and the Comparative examples, materials listed below were used.

(Polyamide)

PA9T-1 :

An autoclave having an inner volume of 20 liters was charged with 4994.4 g (30.1 moles) of terephthalic acid, 4977.1 g (31.4 moles) of a mixture of 1,9-nonanediamine and 2-methyl-1,8-octanediamirie (the former / the latter = 85 / 15 by mole), 149.8 g (1.2 moles) of benzoic acid, 10 g of sodium hypophosphite and 2.5 liters of distilled water, and the atmosphere inside the autoclave was replaced with nitrogen. The mixture was stirred at 100 °C for 30 minutes, and the temperature inside the autoclave was increased to 220 °C over 2 hours. At this time, the pressure inside the autoclave was also increased to 2 MPa. In this state, the reaction was continued for 2 hours. Then, the temperature was increased to 230 °C. Subsequently, the temperature was maintained at 230 °C, and the reaction was continued for 2 hours while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [η] of 0.14 dl/g. The obtained prepolymer was dried at 100 °C under reduced pressure for 12 hours and was pulverized to a particle size of 2 mm or less. The pulverized prepolymer was subjected to solid phase polymerization at 230 °C and 13 Pa (0.1 mmHg) for 10 hours, thereby obtaining a white polyamide (PA9T-1) having a melting point of 306 °C, an intrinsic viscosity [η] of 0.73 dl/g, terminal amino groups content of 100 μeq/g, and terminal blocking ratio of 90 %. Benzoic acid was a terminal blocking agent.

PA9T-2:

A white polyamide (PA9T-2) having a melting point of 306 °C, an intrinsic viscosity [n] of 0.80 dl/g, terminal amino groups content of 10 μeq/g, and a terminal blocking ratio of 90 % was obtained by the same method as in the manufacturing of the above-mentioned PA9T-1, except that the amount of the terephthalic acid was changed to 4931.5g (29.7 moles), the amount of the mixture of 1,9-nonanediamine and 2-methyl-1,8-octanediamine (the former / the latter = 85 / 15 by mole) was changed to 4844.1 g (30.6 moles), and the amount of the benzoic acid was changed to 224.2 g (1.8 moles).

PA9T-3:

A white polyamide (PA9T-3) having a melting point of 306 °C, an intrinsic viscosity [η] of 1.19 dl/g, terminal amino groups content of 75 μeq/g, and a terminal blocking ratio of 86 % was obtained by the same method as in the manufacturing of the above-mentioned PA9T-1, except that the amount of the terephthalic acid was changed to 5032.1g (30.3 moles), the amount of the mixture of 1,9-nonanediamine and 2-methyl-1,8-octanediamine (the former / the latter = 85 / 15 by mole) was changed to 4984.3g (31.5 moles), and the amount of the benzoic acid was changed to 105.0g (0.9 mole).

PA6-6T:

A white polyamide (PA6-6T) having a melting point of 310 °C, an intrinsic viscosity [η] of 0.82 dl/g, terminal amino groups content of 72 μeq/g, and a terminal blocking ratio of 89 % was obtained by the same method as in the manufacturing of the above-mentioned PA9T-1, except that 4994.4 g (30.1 moles) of the terephthalic acid, 4977.1 g (31.4 moles) of the mixture of 1,9-nonanediamine and 2-methyl-1,8-octanediamine (the former / the latter = 85 / 15 by mole), and 149.8 g (1.2 moles) of the benzoic acid used in the manufacturing of the above-mentioned PA9T-1 were changed to 3134.4 g (18.9 moles) of terephthalic acid, 2255.9g (15.4 moles) of adipic acid, 4295.9g (37.0 moles) of hexametylenediamine, and 303.9 g (2.5 moles) of benzoic acid.

(Bromine-containing flame retardant)

a: GMA-PBS (produced by Chemtura Corp., CP44HF; glycidyl methacrylate modified polybromostyrene)

(Flame retardant aid)

b: Zinc stannate (produced by Alcan Inc., FLAMTARD-S; calcinated zinc stannate)

(Anti-dripping agent)

c: Fibrous PTFE (produced by DuPont-Mitsui Fluorochemicals Co., Ltd., 640J; fine powder of polytetrafluoroethylene)

d: Mah-PS (produced by Nova Chemicals Corp., D332; acid anhydride modified polystyrene; maleic anhydride (denaturant) used amount is 15 mass %; weight-average molecular weight is 200,000)

e: Mah-SEBS (produced by Asahi Kasei Chemicals Corp., M1913; maleic anhydride modified styrene-ethylene/butylene-styrene block copolymer)

f: Ionomer (produced by DuPont-Mitsui Polychemicals Co., Ltd., 1707; olefine-based ionomer (Ionically bonded by Na))

(Reinforcing agent)

g: Standard glass fibers (produced by Nitto Boseki Co., Ltd., CS-3G-225; cross section is round shape, 3 mm chopped strand, fiber diameter is 9.5 μm)

h: Cut fiber (produced by Nitto Boseki Co., Ltd., 05DE-404; cross section is round shape, fiber length is 100 μm, and fiber diameter is 6.5 μm).

(Amide compound)

i: Amide compound (produced by Kyoeisha Chemical Co., Ltd., WH255; ethylene bisamide viscosity-reducing agent)

(Ester compound)

j: Compound represented in the formula (I), wherein $R^1$ and $R^2$ are heneicosyl group, and m and n are 1.

(Mica)

k: Mica (produced by Yamaguchi Mica Co., Ltd., A-41; plate-like filler)

< Examples 1 to 7 and Comparative examples 1 to 12>

Constituents other than the standard glass fiber or the cut fiber were dry-blended collectively to obtain a premixture according to the compounding ratio shown in the following Tables 1 to 3, then the premixture was fed into a twin-screw extruder (produced by Reserch Labolatory of Plastics Technology Co., Ltd., BTN-32; having a screw diameter of 30 mm, L/D of 28, a cylinder temperature of 320 °C, and a rotating speed of 150 rpm) through a hopper, and the standard glass fibers or the cut fibers was fed into the twin-screw extruder through a side feeder, and then they were plasticizing-kneaded, cooled, and cut, to obtain pellets of a polyamide composition. Mechanical properties, flame retardance, deformation degree, solder reflow resistance, bar-flow length, and surface appearance were evaluated by using the pellets. The results are shown in Tables 1 to 3.

As shown in Tables 1 to 3, as for the compositions in Comparative examples 1, 2 and 6 that only a fluorine resin was mixed as the anti-dripping agent (C) with the polyamide PA9T-1 having an excellent flowability, the test specimens were deformed while the flame retardance test, and the ratings of the flame retardance were V-2 since flame-retardant effect was deteriorated and the cotton cloth was ignited by dripping. As for the composition in Comparative example 6 that mica was mixed, the weld strength tended to be deteriorated. Moreover, the compositions in Comparative examples 5 and 7 that a fluorine resin was mixed voluminously had a flame retardance of V-0, but this V-O was extremely

unstable because of large deformation value and of dripping, and appearing fiber foreign material resulted in a defective exterior appearance. The composition in Comparative example 4 that only a fluorine resin was mixed as anti-dripping agent (C) with the polyamide (PA9T-3) with a low flowability had a good strength and a steady flame retardance, but it had a drawback in the moldability since the flowability was low.

As for the composition in Comparative example 3 that only an acid anhydride modified polystyrene was mixed as anti-dripping agent (C), the test specimen was deformed while the flame retardance test, and the rating of the flame retardance was V-2 since the flame-retardant effect was deteriorated and the cotton cloth was ignited by dripping. Moreover, as for the composition in Comparative example 8 that a fluorine resin and an acid anhydride modified polystyrene were used together in small amounts, the test specimen was deformed while the flame retardance test, and the rating of the flame retardance was V-2 since the flame-retardant effect was deteriorated and the cotton cloth was ignited by dripping. The compositions in Comparative examples 9 to 12 that the ratio of a fluorine resin and an acid anhydride modified polystyrene or ionomer had come off from the range regulations by the present invention had flame retardance of V-2 easily, and even if the flame retardance was V-0 incidentally, the V-0 was extremely unstable because of the deformation and of dripping.

On the other hand, as shown in Examples 1 to 7, the polyamide composition that a fluorine resin, and an acid anhydride modified polystyrene, a maleic anhydride modified styrene-ethylene / butylene - styrene block copolymer or an ionomer were used together within the range of the present invention, had small deformation after the flame retardance test and steady V-0.

[Tab.1]

Table 1

| Compounding Ratio [parts by mass] | Examples | | | | |
|---|---|---|---|---|---|
| | 1 | 2 | 3 | 4 | 5 |
| PA9T-1 | 100 | 100 | 100 | 100 | 0 |
| PA9T-2 | 0 | 0 | 0 | 0 | 0 |
| PA9T-3 | 0 | 0 | 0 | 0 | 0 |
| PA6-6T | 0 | 0 | 0 | 0 | 100 |
| [a] GMA-PBS | 47.6 | 47.6 | 47.6 | 47.6 | 47.6 |
| [b] Zinc stannate | 7.1 | 7.1 | 7.1 | 7.1 | 7.1 |
| [c] Fibrous PTFE | 1.2 | 1.2 | 1.2 | 1.2 | 1.2 |
| [d] Mah-PS | 1.2 | 1.2 | 0 | 0 | 1.2 |
| [e] Mah-SEBS | 0 | 0 | 1.2 | 0 | 0 |
| [f] Ionomer | 0 | 0 | 0 | 1.2 | 0 |
| [g] Standard glass fiber | 78.6 | 0 | 78.6 | 78.6 | 78.6 |
| [h] Cut fiber | 0 | 78.6 | 0 | 0 | 0 |
| [i] Amide compound | 2.4 | 2.4 | 2.4 | 2.4 | 2.4 |
| [j] Ester compound | 0 | 0 | 0 | 0 | 0 |
| [k] Mica | 0 | 0 | 0 | 0 | 0 |
| Evaluation result | | | | | |
| Tensile strength at break [MPa] | 165 | 110 | 158 | 168 | 170 |
| Weld strength at break [MPa] | 38 | 45 | 34 | 37 | 40 |
| Flame retardance (UL94) | V-0 | V-0 | V-0 | V-0 | V-0 |
| Degree of deformation | A | A | A | A | A |
| Solder reflow resistance [°C] | 270 | 270 | 270 | 270 | 255 |
| Bar-flow length [mm] | 72 | 80 | 74 | 70 | 69 |
| Surface appearance | A | A | A | A | A |

[Tab.2]

Table 2

| Compounding Ratio [parts by mass] | Comparative Examples | | | | | | |
|---|---|---|---|---|---|---|---|
| | 1 | 2 | 3 | 4 | 5 | 6 | 7 |
| PA9T-1 | 100 | 100 | 100 | 0 | 100 | 100 | 0 |
| PA9T-2 | 0 | 0 | 0 | 0 | 0 | 0 | 100 |
| PA9T-3 | 0 | 0 | 0 | 100 | 0 | 0 | 0 |
| PA6-6T | 0 | 0 | 0 | 0 | 0 | 0 | 0 |
| [a] GMA-PBS | 47.1 | 47.1 | 47.1 | 47.1 | 48.8 | 53.3 | 64.8 |
| [b] Zinc stannate | 7.1 | 7.1 | 7.1 | 7.1 | 7.3 | 8.0 | 14.1 |
| [c] Fibrous PTFE | 1.2 | 1.2 | 0 | 1.2 | 4.9 | 1.3 | 4.2 |
| [d] Mah-PS | 0 | 0 | 1.2 | 0 | 0 | 0 | 0 |
| [e] Mah-SEBS | 0 | 0 | 0 | 0 | 0 | 0 | 0 |
| [f] Ionomer | 0 | 0 | 0 | 0 | 0 | 0 | 0 |
| [g] Standard glass fiber | 77.6 | 0 | 77.6 | 77.6 | 80.4 | 88.0 | 93.0 |
| [h] Cut fiber | 0 | 77.6 | 0 | 0 | 0 | 0 | 0 |
| [i] Amide compound | 2.4 | 2.4 | 2.4 | 2.4 | 2.4 | 2.7 | 0 |
| [j] Ester compound | 0 | 0 | 0 | 0 | 0 | 0 | 5.6 |
| [k] Mica | 0 | 0 | 0 | 0 | 0 | 13.3 | 0 |
| Evaluation result | | | | | | | |
| Tensile strength at break [MPa] | 168 | 108 | 166 | 190 | 158 | 153 | 170 |
| Weld strength at break [MPa] | 39 | 46 | 40 | 62 | 25 | 18 | 35 |
| Flame retardance (UL94) | V-2 | V-2 | V-2 | V-0 | V-0 | V-2 | V-0 |
| Degree of deformation | D | D | D | A | B | D | C |
| Solder reflow resistance [°C] | 270 | 270 | 270 | 270 | 270 | 270 | 265 |
| Bar-flow length [mm] | 73 | 81 | 73 | 33 | 65 | 67 | 90 |
| Surface appearance | A | A | A | A | B | A | A |

[Tab.3]

Table 3

| Compounding Ratio [parts by mass] | Examples | | Comparative Examples | | | | |
|---|---|---|---|---|---|---|---|
| | 6 | 7 | 8 | 9 | 10 | 11 | 12 |
| PA9T-1 | 100 | 100 | 100 | 100 | 100 | 100 | 100 |
| PA9T-2 | 0 | 0 | 0 | 0 | 0 | 0 | 0 |
| PA9T-3 | 0 | 0 | 0 | 0 | 0 | 0 | 0 |
| PA6-6T | 0 | 0 | 0 | 0 | 0 | 0 | 0 |
| [a] GMA-PBS | 47.1 | 47.1 | 46.7 | 47.1 | 47.3 | 47.1 | 47.1 |
| [b] Zinc stannate | 7.1 | 7.1 | 7.0 | 7.1 | 7.1 | 7.1 | 7.1 |
| [c] Fibrous PTFE | 0.6 | 0.8 | 0.2 | 1.0 | 0.2 | 0.2 | 0.2 |

(continued)

| Compounding Ratio [parts by mass] | Examples | | Comparative Examples | | | | |
|---|---|---|---|---|---|---|---|
| | 6 | 7 | 8 | 9 | 10 | 11 | 12 |
| [d] Mah-PS | 0.6 | 0.4 | 0.2 | 0.2 | 1.4 | 1.0 | 0 |
| [e] Mah-SEBS | 0 | 0 | 0 | 0 | 0 | 0 | 0 |
| [f] Ionomer | 0 | 0 | 0 | 0 | 0 | 0 | 1.0 |
| [g] Standard glass fiber | 77.6 | 77.6 | 77.1 | 77.6 | 78.0 | 77.6 | 77.6 |
| [h] Cut fiber | 0 | 0 | 0 | 0 | 0 | 0 | 0 |
| [i] Amide compound | 2.4 | 2.4 | 2.3 | 2.4 | 2.4 | 2.4 | 2.4 |
| [j] Ester compound | 0 | 0 | 0 | 0 | 0 | 0 | 0 |
| [k] Mica | 0 | 0 | 0 | 0 | 0 | 0 | 0 |
| Evaluation result | | | | | | | |
| Tensile strength at break [MPa] | 166 | 165 | 167 | 165 | 165 | 172 | 170 |
| Weld strength at break [MPa] | 39 | 39 | 39 | 39 | 38 | 40 | 39 |
| Flame retardance (UL94) | V-0 | V-0 | V-2 | V-0 | V-2 | V-2 | V-2 |
| Degree of deformation | A | A | D | C | D | D | D |
| Solder reflow resistance [°C] | 270 | 270 | 270 | 265 | 270 | 270 | 270 |
| Bar-flow length [mm] | 73 | 73 | 73 | 73 | 74 | 70 | 72 |
| Surface appearance | A | A | A | A | A | A | A |

Industrial applicability

Since the polyamide composition of the present invention has high flowability and flame retardance as high as V-0 class, it is suitable for injection molding, and electronic parts having thin wall portion such as connector, socket, capacitor seat, switch, camera module, and automotive connector installed in surface mount device can be obtained by the injection molding. The polyamide composition is rangy in application field such as recent downsized electric household appliances or automotive electrical equipments, and is very important on industry.

## Claims

**1.** A polyamide composition comprising:

100 parts by mass of polyamide (A) with a melting point of 270 °C to 340 °C,
1 to 100 parts by mass of flame retardant (B), and
1 to 10 parts by mass of anti-dripping agent (C),

wherein the anti-dripping agent (C) comprises a fluorine resin (C1) and at least one polymer (C2) selected from the group consisting of an ionomer and a modified aromatic vinyl-based polymer containing less than 15 mass % of halogen atom, in which a mass ratio of the fluorine resin (C1) / the polymer (C2) is 1/4 to 4/1.

**2.** The polyamide composition according to claim 1, wherein the polymer (C2) is the modified aromatic vinyl-based polymer containing less than 15 mass % of halogen atom.

**3.** The polyamide composition according to claim 1 or 2, wherein the above polyamide (A) is composed of a dicarboxylic acid component unit (a1) comprising 40 to 100 mol % of an aromatic dicarboxylic acid unit, and a diamine component unit (a2) comprising 50 to 100 mol % of an aliphatic alkylenediamine unit having 6 to 18 carbon atoms.

**4.** The polyamide composition according to claim 3, wherein the aromatic dicarboxylic acid unit is derived from terephthalic acid.

**5.** The polyamide composition according to claim 3 or 4, wherein the aliphatic alkylenediamine unit having 6 to 18 carbon atoms is derived from 1,9-nonanediamine and / or derived from 2-methyl-1,8-octanediamine.

**6.** The polyamide composition according to any one of claims 1 to 5, wherein the polyamide (A) is not less than 40 μeq/g and not more than 120 μeq/g in terminal amino group content.

**7.** The polyamide composition according to any one of claims 1 to 6, wherein the polyamide resin (A) has an intrinsic viscosity in concentrated sulfuric acid at 30 °C of 0.6 dl/g to 1.1 dl/g.

**8.** The polyamide composition according to any one of claims 1 to 7, wherein the flame retardant (B) is at least one flame retardant selected from the group consisting of bromine-containing flame retardant and phosphorus flame retardant.

**9.** The polyamide composition according to any one of claims 1 to 7, wherein the flame retardant (B) is bromine-containing flame retardant having epoxy group and / or acid anhydride group.

**10.** The polyamide composition according to any one of claims 1 to 9, wherein a content of the anti-dripping agent (C) is 1 to 3 parts by mass per 100 parts by mass of the polyamide (A).

**11.** The polyamide composition according to any one of claims 1 to 10, wherein the fluorine resin (C1) is polytetrafluoroethylene having fibril-forming properties, and the polymer (C2) is polystyrene having epoxy group and / or acid anhydride group.

**12.** The polyamide composition according to any one of claims 1 to 11, further comprising 1 to 50 parts by mass of flame retardant aid (D) and / or 0.1 to 300 parts by mass of filler (E), per 100 parts by mass of the polyamide (A).

**13.** The polyamide composition according to claim 12, wherein the filler (E) is at least one glass fiber selected from the group consisting of chopped strand, milled fiber, and cut fiber.

**14.** The polyamide composition according to any one of claims 1 to 13, further comprising 0.2 to 10 parts by mass of amide compound (F) per 100 parts by mass of the polyamide (A).

**15.** The polyamide composition according to any one of claims 1 to 14, wherein bar-flow length is not less than 65 mm when a melted resin is injected into a sheet shape mold of 0.5 mm in thickness and 40 mm in width at a cylinder temperature of 320 °C, an injection pressure of 74 MPa, and a mold temperature of 140 °C.

**16.** A molded article comprising the polyamide composition according to any one of claims 1 to 15.

**17.** A method for manufacturing of a polyamide composition comprising steps of:

preparing an anti-dripping agent (C) comprising a fluorine resin (C1) and at least one polymer (C2) selected from the group consisting of an ionomer and a modified aromatic vinyl-based polymer containing less than 15 mass % of halogen atom, in which a mass ratio of the fluorine resin (C1) / the polymer (C2) is 1/4 to 4/1; and melt-kneading 100 parts by mass of polyamide (A) with a melting point of 270 °C to 340 °C, 1 to 100 parts by mass of flame retardant (B), and 1 to 10 parts by mass of the anti-dripping agent (C).

## Patentansprüche

**1.** Polyamidzusammensetzung, umfassend:

100 Masse-Teile eines Polyamids (A) mit einem Schmelzpunkt von 270°C bis 340°C,
1 bis 100 Masse-Teile eines Flammschutzmittels (B) und
1 bis 10 Masse-Teile eines Antitropfmittels (C),

wobei das Antitropfmittel (C) ein Fluorharz (C1) und mindestens ein Polymer (C2), ausgewählt aus der Gruppe,

bestehend aus einem Ionomer und einem modifizierten aromatischen Polymer auf Vinyl-Basis enthaltend weniger als 10 Masse-% Halogenatom, umfaßt, worin ein Masseverhältnis des Fluorharzes (C1)/des Polymers (C2) 1/4 bis 4/1 beträgt.

**2.** Polyamidzusammensetzung gemäß Anspruch 1, wobei das Polymer (C2) das modifizierte aromatische Polymer auf Vinyl-Basis enthaltend weniger als 15 Masse-% Halogenatom ist.

**3.** Polyamidzusammensetzung gemäß Anspruch 1 oder 2, wobei das vorstehende Polyamid (A) aus einer Dicarbonsäurekomponenteneinheit (a1), umfassend 40 bis 100 Mol.-% einer aromatischen Dicarbonsäureeinheit, und einer Diaminkomponenteneinheit (a2), umfassend 50 bis 100 Mol.-% einer aliphatischen Alkylendiamineinheit mit 6 bis 18 Kohlenstoffatomen, aufgebaut ist.

**4.** Polyamidzusammensetzung gemäß Anspruch 3, wobei die aromatische Dicarbonsäureeinheit von Terephthalsäure abgeleitet ist.

**5.** Polyamidzusammensetzung gemäß Anspruch 3 oder 4, wobei die aliphatische Alkylendiamineinheit mit 6 bis 18 Kohlenstoffatomen von 1,9-Nonandiamin abgeleitet ist und/oder von 2-Methyl-1,8-octandiamin abgeleitet ist.

**6.** Polyamidzusammensetzung gemäß einem der Ansprüche 1 bis 5, wobei das Polyamid (A) nicht weniger als 40 μeq/g und nicht mehr als 120 μeq/g im terminalen Aminogruppengehalt ist.

**7.** Polyamidzusammensetzung gemäß einem der Ansprüche 1 bis 6, wobei das Polyamidharz (A) eine innere Viskosität in konzentrierter Schwefelsäure bei 30°C von 0,6 dl/g bis 1,1 dl/g aufweist.

**8.** Polyamidzusammensetzung gemäß einem der Ansprüche 1 bis 7, wobei das Flammschutzmittel (B) mindestens ein Flammschutzmittel, ausgewählt aus der Gruppe, bestehend aus bromhaltigen Flammschutzmittel und Phosphor-Flammschutzmittel, ist.

**9.** Polyamidzusammensetzung gemäß einem der Ansprüche 1 bis 7, wobei das Flammschutzmittel (B) ein bromhaltiges Flammschutzmittel mit Epoxygruppen und/oder Säureanhydridgruppen ist.

**10.** Polyamidzusammensetzung gemäß einem der Ansprüche 1 bis 9, wobei ein Gehalt des Antitropfmittels (C) 1 bis 3 Masse-Teile pro 100 Masse-Teilen des Polyamids (A) ist.

**11.** Polyamidzusammensetzung gemäß einem der Ansprüche 1 bis 10, wobei das Fluorharz (C1) Polytetrafluorethylen mit Fibrillen-bildenden Eigenschaften ist und das Polymer (C2) Polystyrol mit einer Epoxygruppe und/oder einer Säureanhydridgruppe ist.

**12.** Polyamidzusammensetzung gemäß einem der Ansprüche 1 bis 11, weiter umfassend 1 bis 50 Masse-Teile eines Flammschutzhilfsmittels (D) und/oder 0,1 bis 300 Masse-Teilen an Füllmittel (E) pro 100 Masse-Teilen des Polyamids (A).

**13.** Polyamidzusammensetzung gemäß Anspruch 12, wobei das Füllmittel (E) mindestens eine Glasfaser, ausgewählt aus der Gruppe, bestehend aus Kurzfasern, zermahlenen Fasern und geschnittenen Fasern, ist.

**14.** Polyamidzusammensetzung gemäß einem der Ansprüche 1 bis 13, weiter umfassend 0,2 bis 10 Masse-Teile einer Amidverbindung (F) pro 100 Masse-Teilen des Polyamids (A).

**15.** Polyamidzusammensetzung gemäß einem der Ansprüche 1 bis 14, wobei die Stab-Fließlänge nicht weniger als 65 mm ist, wenn ein geschmolzenes Harz in eine lagenförmige Form von 0,5 mm in der Dicke und 40 mm in der Breite bei einer Zylindertemperatur von 320°C, einem Injektionsdruck von 74 MPa und einer Schmelztemperatur von 140°C injiziert wird.

**16.** Formgegenstand, umfassend die Polyamidzusammensetzung gemäß einem der Ansprüche 1 bis 15.

**17.** Verfahren zur Herstellung einer Polyamidzusammensetzung, umfassend die Schritte:

das Herstellen eines Antitropfmittels (C); umfassend ein Fluorharz (C1) und mindestens ein Polymer (C2),

ausgewählt aus der Gruppe, bestehend aus einem Ionomer und einem modifizierten aromatischen Polymer auf Vinyl-Basis enthaltend weniger als 15 Masse-% Halogenatom, worin ein Massenverhältnis des Fluorharzes (C1)/des Polymers(C2) 1/4 bis 4/1 beträgt, und
das Schmelzkneten von 100 Masse-Teilen des Polyamids (A) mit einem Schmelzpunkt von 270°C bis 340°C, 1 bis 100 Masse-Teilen des Flammschutzmittels (B) und 1 bis 10 Masse-Teilen des Antitropfmittels (C).

**Revendications**

1. Composition polyamide comprenant :

    100 parties en masse de polyamide (A) présentant un point de fusion de 270°C à 340°C,
    de 1 à 100 parties en masse de retardateur de flamme (B), et
    de 1 à 10 parties en masse d'agent anti-coulure (C),

    dans laquelle l'agent anti-coulure (C) comprend une résine fluorée (C1) et au moins un polymère (C2) sélectionné à partir du groupe constitué par un ionomère et un polymère à base de vinyle aromatique modifié contenant moins de 15 % en masse d'atomes d'halogène, dans lequel un rapport en masse de la résine fluorée (C1)/ le polymère (C2) est de 1/4 à 4/1.

2. Composition polyamide selon la revendication 1, dans laquelle le polymère (C2) est le polymère à base de vinyle aromatique modifié contenant moins de 15 % en masse d'atome d'halogène.

3. Composition polyamide selon la revendication 1 ou 2, dans laquelle le polyamide (A) précédent est composé d'une unité composante d'acide dicarboxylique (a1) comprenant de 40 à 100 moles % d'une unité d'acide dicarboxylique aromatique, et d'une unité composante de diamine (a2) comprenant de 50 à 100 moles % d'une unité d'alkylènediamine aliphatique comportant de 6 à 18 atomes de carbone.

4. Composition polyamide selon la revendication 3, dans laquelle l'unité d'acide dicarboxylique aromatique est dérivée d'acide téréphtalique.

5. Composition polyamide selon la revendication 3 ou 4, dans laquelle l'unité d'alkylènediamine aliphatique comportant de 6 à 18 atomes de carbone est dérivée de 1, 9-nonanediamine et/ou dérivée de 2-méthyl-1,8-octanediamine.

6. Composition polyamide selon l'une quelconque des revendications 1 à 5, dans laquelle la teneur en groupe terminal animo du polyamide (A) n'est pas inférieure à 40 μeq/g et pas supérieure à 120 μeq/g.

7. Composition polyamide selon l'une quelconque des revendications 1 à 6, dans laquelle la résine polyamide (A) présente une viscosité intrinsèque dans de l'acide sulfurique concentré à 30°C de 0,6 dl/g à 1,1 dl/g.

8. Composition polyamide selon l'une quelconque des revendications 1 à 7, dans laquelle le retardateur de flamme (B) est au moins un retardateur de flamme sélectionné à partir du groupe constitué par un retardateur de flamme contenant du brome et un retardateur de flamme à base de phosphore.

9. Composition polyamide selon l'une quelconque des revendications 1 à 7, dans laquelle le retardateur de flamme (B) est un retardateur de flamme contenant du brome, comportant un groupe époxy et/ou un groupe anhydride d'acide.

10. Composition polyamide selon l'une quelconque des revendications 1 à 9, dans laquelle une teneur en l'agent anti-coulure (C) est de 1 à 3 parties en masse pour 100 parties en masse du polyamide (A).

11. Composition polyamide selon l'une quelconque de revendications 1 à 10, dans laquelle la résine fluorée (C1) est du polytétrafluoroéthylène présentant des propriétés de formation de fibrille, et le polymère (C2) est du polystyrène comportant un groupe époxy et/ou un groupe anhydride d'acide.

12. Composition polyamide selon l'une quelconque des revendications 1 à 11, comprenant, en outre, de 1 à 50 parties en masse d'agent retardateur de flamme (D) et/ou de 0,1 à 300 parties en masse de charge (E), pour 100 parties en masse du polyamide (A).

**13.** Composition polyamide selon la revendication 12, dans laquelle la charge (E) est au moins une fibre de verre sélectionnée parmi le groupe constitué par, des brins hachés, des fibres broyées et des fibres coupées.

**14.** Composition polyamide selon l'une quelconque des revendications 1 à 13, comprenant, en outre, de 0,2 à 10 parties en masse du composé amide (F) pour 100 parties en masse du polyamide (A).

**15.** Composition polyamide selon l'une quelconque des revendications 1 à 14, dans laquelle la longueur d'écoulement en barre n'est pas inférieure à 65 mm lorsqu'une résine fondue est injectée dans un moule en forme de feuille de 0,5 mm d'épaisseur et de 40 mm de largeur à une température de cylindre de 320°C, une pression d'injection de 74 MPa, et une température de moule de 140°C.

**16.** Article moulé comprenant la composition polyamide selon l'une quelconque des revendications 1 à 15.

**17.** Procédé de fabrication d'une composition polyamide comprenant les étapes de:

préparation d'un agent anti-coulure (C) comprenant une résine fluorée (C1) et au moins un polymère (C2) sélectionné à partir du groupe constitué par un ionomère et un polymère à base de vinyle aromatique modifié contenant moins de 15 % en masse d'atomes d'halogène, dans lequel un rapport en masse de la résine fluorée (C1)/le polymère (C2) est de 1/4 à 4/1 ; et

malaxage en fusion de 100 parties en masse de polyamide (A) présentant un point de fusion de 270°C à 340°C, de 1 à 100 parties en masse de retardateur de flamme (B), et de 1 à 10 parties en masse de l'agent anti-coulure (C).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003082228 A
- US 20020055589 A
- US 20030229162 A
- JP H11172119 B
- JP 2005170963 A
- JP 2002114906 A
- US 5773556 A
- US 3370030 A
- US 3032589 A